# EUROPEAN PATENT SPECIFICATION

(11) **EP 2 828 092 B1**
(45) Date of publication and mention of the grant of the patent: **03.02.2016**
(21) Application number: 13713573.7
(22) Date of filing: 20.03.2013
(51) Int. Cl.: B41M 5/52, D21H 25/06, D21H 19/82, D21H 19/36, D21H 27/26, B32B 29/00, B41J 2/01

(54) **DECORATIVE PAPER**
DEKORPAPIER
PAPIER DÉCORATIF

(30) Priority: 20.03.2012 NL 2008509
(43) Date of publication of application: 28.01.2015
(73) Proprietor: Coldenhove Know How B.V., 6961 LG Eerbeek (NL)
(72) Inventor: STAWICKA, Ania Karolina, NL-6961 LG Eerbeek (NL); SPORTEL, Koert Johannes, NL-6961 LG Eerbeek (NL); CORNELISSEN, Cornelis Hendricus, NL-6961 LG Eerbeek (NL)
(74) Representative: V.O.
(86) International application number: PCT/NL2013/050205
(87) International publication number: WO 2013/141706

(56) References cited:
- EP-A1- 1 044 822
- EP-A1- 1 619 550
- EP-A1- 1 770 214
- WO-A1-2005/116337
- JP-A- 2003 001 782

## Description

The invention is directed to a decorative paper suitable for inkjet printing, as well as to the process of preparing and use of such paper.

Decorative papers are used for instance in the production of decorative laminates for use as building materials, in furniture manufacture and on interior surfaces.

Traditional printing methods involve large production runs for mass production of printed decorative paper. However, such methods are not cost effective and unsuitable for producing small production runs of high quality producing customized decorative applications for bespoke design or for proofing.

Inkjet printing enables the production of such bespoke tailor made decorative laminates. The decorative papers suitable for inkjet printing are known and typically comprise a carrier material with an ink receiving layer, and optionally further layers.

US-A-6 599 592 describes such a recording paper for inkjet printing consisting of an ink receivable layer and a base paper, which base paper is impregnated with a resin.

US-A-2010/0282407 describes a decorative paper containing a resin impregnated base paper and an ink receiving layer, which decorative paper can be printed by inkjet printing and then pressed directly with a wood material to form a laminate.

EP-A-1 044 822 describes a decorative base paper with an ink receiving layer suitable for inkjet printing.

JP-A-2003 001782 describes a decorative plate comprising a transparent paper and base materials.

WO-A-2005/116337 describes a method of producing a decorative paper comprising at least one ink-fixing layer, which decorative paper can be printed by inkjet printing and impregnated with a thermosetting resin to produce a decorative laminate.

EP-A-1 770 214 describes a printing paper suitable for use as a recording material, which printed paper comprises a pigment coated base paper.

EP-A-1 619 550 describes a method for preparing an inkjet printing paper comprising a pigment coated base paper sheet and a polymer resin coating.

The decorative papers as described in the prior art typically use a base paper containing a pigment, such as titanium dioxide. The pigment present in the base paper acts to provide opacity to the decorative paper. However, the disadvantage of using a pigment in the base paper is that a large amount of the pigment is required to obtain the opacity needed in decorative papers.

A further disadvantage of known decorative papers is dust formation. This is particularly disadvantageous since the presence of dust leads to the clogging of the print head, making unattended printing impossible. Also it requires more cleaning cycles, causing ink loss and wear of the print heads.

It is therefore an object of the present invention to provide an improved decorative paper.

Surprisingly it was found that not only the opacity of a decorative paper can be improved, but also dust formation can be reduced considerably if the pigments are present only or substantially only in a top-coating of a decorative paper.

Accordingly the present invention is directed to a decorative paper, suitable for inkjet printing comprising a base paper, on which is present a top-coating to form a coated base paper, wherein said decorative paper contains one or more pigments, and wherein substantially all the pigments are present in said top-coating.

The top-coating of the decorative paper according to the present invention acts to receive the ink from an inkjet printer. The top-coating may suitably comprise a hydrophilic coating, in particular comprising watersoluble or water-dispersible polymers, such as polyvinyl alcohol, cationic polyvinyl alcohol, alginate, polyvinyl pyrrolidone, polyvinyl acetate, starch, carboxymethylcellulose (CMC) and mixtures thereof. The top-coating may also suitably comprise one or more wet strength agents or cross-linking agents, preferably those selected from the list consisting of urea resins, melamine resins, epoxy resins, glyoxal resins, zirconium salts and combinations thereof.

The weight of the top-coating of the decorative paper according to the present invention is typically from 10-30 g/m², preferably from 15-25 g/m², and more preferably about 20 g/m².

Preferably the amount of the one or more pigments present in the top-coating of the decorative paper according to the present invention is > 85 wt. %, more preferably > 90 wt. %, even more preferably > 92 wt. %, and most preferably > 93 wt. %, based on the weight of the top-coating.

The amount of the one or more pigments present in the top-coating of the decorative paper is typically less than 99 wt. %, preferably less than 98 wt. %, and more preferably less than 97 wt. %, based on the weight of the top-coating.

Surprisingly it was found that the presence of substantially all the one or more pigments in the top-coating of the decorative paper is sufficient to obtain a desired level of opacity. This is advantageous, since the amounts of pigments required in the decorative paper to achieve the desired opacity is less than in known decorative papers.

The term "substantially" is used herein to indicate that the majority, typically more than 55 wt. %, preferably more than 60 wt. %, more preferably more than 70 wt. %, even more preferably more than 75 wt.%, most preferably more than 77 wt. % of the total pigments in the paper are present in the top-coating.

Suitable pigments which may be used in the decorative paper according to the present invention are selected from the group consisting of titanium dioxide, aluminum oxide, aluminum hydroxide, silica, talc, barium sulfate, kaolin and mixtures thereof. Preferably the pigment used is titanium dioxide.

Base papers suitable to be used in the decorative paper according to the present invention comprise cellulose and one or more additives. Suitable additives may include filler pigments, wet strength agents, cross-linking agents, retention aids, fixing aids and combinations thereof. Softwood cellulose, hardwood cellulose or mixtures of both types of cellulose can be used to produce the decorative base papers.

For a decorative paper to be suitable for inkjet printing the porosity cannot be too high, otherwise the ink penetrates too deeply into the decorative paper. Furthermore, the porosity of the decorative paper cannot be too low; otherwise the resin penetration during the process of lamination will be disturbed and will lead to blistering or splitting of the layers.

Surprisingly it was found that the presence of substantially all the one or more pigments in the top-coating of said decorative paper also results in a suitable porosity.

Typically, the porosity of the unprinted decorative paper according to the present invention is from 100-500 ml/min, preferably 200-400 ml/ min, and more preferably about 300 ml/min, as defined by ISO standard 5636-3. The porosity of the printed decorative paper according to the present invention is typically from 50-250 ml/min, preferably about 100 ml/min, as defined by ISO standard 5636-3.

A further advantage of the decorative paper according to the present invention is that the paper is substantially dust free. This is particularly advantageous since the presence of dust greatly impedes the unattended production of high quality, uniform printed decorative paper.

The invention also comprises a process for preparing a decorative paper suitable for inkjet printing, wherein a top-coating is applied on to a base paper by means of a coating process.

One such suitable coating process is described in WO-A-00/06392, which process comprises applying a top-coating layer to one side of a transfer paper by means of a coating process in which an excess of the top-coating layer is first applied and subsequently wiped with a wiping knife (blade knife) or roller knife.

The decorative paper may be printed in high quality using various inkjet methods, preferably using pigmented inks which may be selected from the group consisting of UV curing inks, water based inks, solvent inks and combinations thereof. Such inks would be known to the skilled person.

Accordingly, the invention further relates to a process for printing the decorative paper of the invention by means of an inkjet printer, preferably on the side of the decorative paper on which the top-coating is present.

The printed decorative paper may be then used in lamination processes. This is surprising, since it would be expected that the presence of substantially all the pigments in the top-coating would result in insufficient binding of the layers in the decorative paper according to the present invention to prevent the layers splitting or separating during the pressing process. However, surprisingly it has been found that splitting or separation of the layers does not occur when said decorative paper according to the present invention is laminated.

The printed decorative paper according to the present invention may be laminated with an impregnated overlayer, an underlayer, and a substrate. Typically the overlayer is present on the top of the coated base paper and the underlayer is present on the bottom of the coated base paper of said printed decorative paper.

Typically the overlayer and the underlayer comprise a high quality cellulose and resins, the underlayer may additionally comprise titanium dioxide or other pigments. A suitable resin may be selected from the group consisting of melamine formaldehyde resins, urea formaldehyde resins, acrylate resins, and mixtures thereof. The main function of the overlayer and the underlayer is to protect the laminates. An additional function of the underlayer may be improvement of the opacity.

During the lamination process, the overlayer, the printed decorative paper according to the present invention and underlayer are placed on a substrate and undergo simultaneous heating and pressing. Typically the substrate may be preferably selected from the group consisting of impregnated kraft paper, MDF board, chip board, and combinations thereof. The high temperature and pressure in the lamination process results in the flow of the resins through the paper fibers and the subsequent curing. The decorative paper according to the present invention is suitable to be used in the lamination processes such as; low pressure lamination (LPL), high pressure lamination (HPL), and continuous pressure lamination (CPL).

Alternatively, the printed decorative paper according to the present invention may be first impregnated and then laminated. Impregnation typically comprises soaking the said decorative paper in a resin, followed by drying. Suitable resins for impregnating are the same as those used in the overlayer and underlayer.

The decorative paper according to the present invention may be suitable for use in the production of decorative laminates for furniture and interior and other customized décor applications.

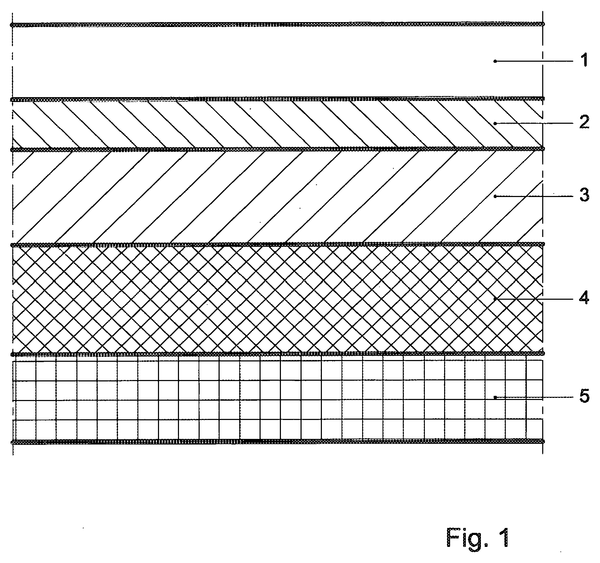

Figure 1 shows schematically a cross section of a laminate prepared from a decorative paper according to the present invention comprising an optional overlayer (1); a printed decorative paper comprising a base paper (3) and a top-coating (2) on the base paper (3) which forms a coated base paper; an optional underlayer (4); and a substrate (5). The one or more pigments are substantially all present in the top-coating (2).

The present invention is now elucidated on the basis of the following non-limiting examples.

### Examples

Decorative papers according to the present invention were prepared using a base paper produced exclusively from chemical pulp and consisting of about 90 wt. % short fibers and about 10 wt. % of long fibers, based on the weight of the paper. The decorative papers further comprised a top-coating on the base paper. The top-coating comprised a hydrophilic polymer and titanium dioxide pigments. The average weight of the coated papers was about 90 g/m².

The prepared decorative papers were printed with water based pigmented inks using either a Mimaki JV33 or an Epson inkjet printer. The printed decorative papers were then laminated.

The following properties of the prepared decorative papers were determined and are shown in Table 1.

The porosity of the coated and printed decorative papers was measured using ISO standard 5636-3.

The print quality of the printed decorative papers was determined by visual appearance, in particular from the dot gain, print sharpness, bleeding and color intensity.

The opacity of the printed decorative papers after lamination was determined by the visual appearance and specifically the transparency.

The lamination quality of the laminated decorative papers was determined by whether the layers split and the blisters.

**Table 1**

| Example | | 1 | 2 | 3 | 4 | 5 | 6 | 7 | 8 | 9 | 10 | 11 | 12 | 13 |
|---|---|---|---|---|---|---|---|---|---|---|---|---|---|---|
| Porosity uncoated paper | ml/min | 2800 | 2800 | 1500 | 2800 | 2800 | 1700 | 2800 | 2800 | 1800 | 1800 | 1800 | 1700 | 1700 |
| Porosity coated paper | ml/min | 80 | 200 | 200 | 150 | 23 | 80 | 90 | 240 | 145 | 136 | 80 | 80 | 150 |
| Porosity printed paper | ml/min | 25 | 90 | 60 | 70 | 0 | 27 | 40 | 100 | 80 | 60 | 30 | 30 | 90 |
| Top-coating | g/m² | 10 | 28 | 20 | 25 | 7.5 | 15 | 34 | 25 | 30 | 25 | 25 | 40 | 18 |
| Pigment in top-coating | wt. % of top-coating | 82 | 93.7 | 97 | 94 | 65 | 65 | 94 | 97 | 94 | 94 | 91 | 94 | 94 |
| Pigment in top-coating | wt. % of total pigments in paper | 72.6 | 89.4 | 86.2 | 88.3 | 61.1 | 75.9 | 91.2 | 88.7 | 82.5 | 79.0 | 79.1 | 74.7 | 57.1 |
| Print quality | | + | + | + | ++ | + | + | + | + | + | + | + | ++ | + |
| Opacity after lamination | | - | ++ | ++ | + | - | - | + | + | ++ | + | + | ++ | + |
| Lamination quality | | - | ++ | ++ | + | - | - | ± | ++ | + | + | - | - | + |

### Print quality

| | |
|---|---|
| - | low (high dot gain, low color intensity) |
| + | good (low dot gain, color intensity not optimal) |
| ++ | very good (low dot gain, high color intensity) |

### Opacity

| | |
|---|---|
| - | low (opaque underlayer required) |
| + | good (in some cases opaque underlayer required) |
| ++ | very good (no opaque underlayer required) |

### Lamination quality

| | |
|---|---|
| - | low (blisters, splitting of the layers) |
| ± | acceptable (few blisters, almost no splitting of the layers) |
| + | good (very few blisters, no splitting of the layers) |
| ++ | very good (no blisters, no splitting of the layers) |

## Claims

1. Decorative paper, suitable for inkjet printing comprising a base paper, on which is present a top-coating to form a coated base paper, wherein said decorative paper contains one or more pigments, wherein substantially all the pigments are present in said top-coating, wherein the amount of the one or more pigments in the top-coating is > 90 wt. % based on the weight of the top-coating, and wherein the porosity of said decorative paper is from 100-500 ml/min, as defined by ISO standard 5636-3.

2. Decorative paper according to claim 1, wherein the weight of the top-coating is from 10-30 g/m².

3. Decorative paper according to any one of the preceding claims, wherein the amount of the one or more pigments in the top-coating is > 92 wt. % based on the weight of the top-coating.

4. Decorative paper according to any one of the preceding claims, wherein the one or more pigments are selected from the group consisting of titanium dioxide, aluminum oxide, aluminum hydroxide, silica, talc, barium sulfate, kaolin and mixtures thereof.

5. Decorative paper according to any one of the preceding claims, wherein the top-coating further comprises one or more wet strength or cross-linking agents.

6. Process for preparing a decorative paper suitable for inkjet printing according to any one of the preceding claims, wherein a top-coating is applied on to a base paper by means of a coating process.

7. Printed decorative paper comprising a decorative paper according to claims 1-5 and a pigmented ink.

8. Printed decorative paper according to the previous claim, wherein said pigmented ink is selected from the group consisting of UV curing inks, water based inks, solvent inks and combinations thereof.

9. Printed decorative paper according to claims 7-8, wherein the porosity of said printed decorative paper is from 50-250 ml/min, as defined by ISO standard 5636-3.

10. Printed decorative paper according to claims 7-9, which further comprises an overlayer and/or an underlayer.

11. Printed decorative paper according to claims 7-10, which further comprises a resin.

12. Printed decorative paper according to claims 7-11, which further comprises a substrate.

13. Process for printing a decorative paper according to claims 1-5, wherein said decorative paper is printed by means of inkjet printing, preferably on the side of the decorative paper on which the top-coating is present.

14. Use of a printed decorative paper according to claims 7-12 for producing laminates, furniture, or customized décor applications.

## Patentansprüche

1. Dekorpapier, das für den Tintenstrahldruck geeignet ist und ein Rohpapier umfasst, auf dem sich eine Deckschicht befindet, um ein beschichtetes Rohpapier zu bilden, wobei das Dekorpapier ein oder mehrere Pigmente enthält, wobei im Wesentlichen alle Pigmente in der Deckschicht vorhanden sind, und die Menge des einen Pigments oder der mehreren Pigmente in der Deckschicht > 90 Gew. % in Bezug auf das Gewicht der Deckschicht beträgt und wobei die Porosität des besagten Dekorpapiers zwischen 100 und 500 ml/min beträgt, wie in der ISO-Norm 5636-3 definiert.

2. Dekorpapier gemäß Anspruch 1, wobei das Gewicht der Deckschicht zwischen 10 und 30 g/m² liegt.

3. Dekorpapier gemäß einem der vorstehenden Ansprüche, wobei die Menge des einen Pigments oder der mehreren Pigmente in der Deckschicht > 92 Gew. % in Bezug auf das Gewicht der Deckschicht beträgt.

4. Dekorpapier gemäß einem der vorstehenden Ansprüche, wobei das eine Pigment oder mehrere Pigmente aus der Gruppe ausgewählt werden, die aus Titandioxid, Aluminiumoxid, Aluminiumhydroxid, Siliziumdioxid, Talk, Bariumsulfat, Kaolin und Mischungen derselben besteht.

5. Dekorpapier gemäß einem der vorstehenden Ansprüche, wobei die Deckschicht zusätzlich auch ein oder mehrere Nassverfestigungsmittel oder Vernetzungsmittel umfasst.

6. Verfahren zur Erstellung eines für den Tintenstrahldruck geeigneten Dekorpapiers gemäß einem der vorstehenden Ansprüche, wobei eine Deckschicht mittels eines Beschichtungsverfahrens auf ein Rohpapier aufgebracht wird.

7. Bedrucktes Dekorpapier, das ein Dekorpapier gemäß den Ansprüchen 1-5 und eine pigmentierte Farbe umfasst.

8. Bedrucktes Dekorpapier gemäß dem vorstehenden Anspruch, wobei die pigmentierte Farbe aus der Gruppe ausgewählt wird, die aus UV-härtenden Farben, wasserbasierten Farben, Lösungsmittelfarben und Kombinationen derselben besteht.

9. Bedrucktes Dekorpapier gemäß den Ansprüchen 7-8, wobei die Porosität des bedruckten Dekorpapiers zwischen 50 und 250 ml/min beträgt, wie durch die ISO-Norm 5636-3 definiert.

10. Bedrucktes Dekorpapier gemäß den Ansprüchen 7-9, wobei es zusätzlich noch eine Überbeschichtung und/oder eine Unterbeschichtung umfasst.

11. Bedrucktes Dekorpapier gemäß den Ansprüchen 7-10, wobei es zusätzlich noch ein Harz umfasst.

12. Bedrucktes Dekorpapier gemäß den Ansprüchen 7-11, wobei es zusätzlich noch ein Substrat umfasst.

13. Verfahren für das Bedrucken eines Dekorpapiers gemäß den Ansprüchen 1-5, wobei das Dekorpapier mittels Tintenstrahldruck bedruckt wird, vorzugsweise auf der Seite des Dekorpapiers, auf der sich die Deckschicht befindet.

14. Verwendung eines bedruckten Dekorpapiers gemäß den Ansprüchen 7-12 zur Herstellung von Laminaten, Möbeln oder kundenspezifischen Dekoranwendungen.

## Revendications

1. Papier décoratif, adapté à l'impression par jet d'encre comprenant un papier de base, sur lequel est présente une couche supérieure pour former un papier de base couché, dans lequel ledit papier décoratif contient un ou plusieurs pigments, dans lequel sensiblement tous les pigments sont présents dans ladite couche supérieure, dans lequel la quantité du ou des pigments dans la couche supérieure est > 90 % en poids sur la base du poids de la couche supérieure, et dans lequel la porosité dudit papier décoratif est de 100-500 ml/min, telle que définie par la norme ISO 5636-3.

2. Papier décoratif selon la revendication 1, dans lequel le poids de la couche supérieure est de 10-30 g/m².

3. Papier décoratif selon l'une quelconque des revendications précédentes, dans lequel la quantité du ou des pigments dans la couche supérieure est > 92 % en poids sur la base du poids de la couche supérieure.

4. Papier décoratif selon l'une quelconque des revendications précédentes, dans lequel le ou les pigments sont choisis dans le groupe constitué de dioxyde de titane, d'oxyde d'aluminium, d'hydroxyde d'aluminium, de silice, de talc, de sulfate de baryum, de kaolin et de mélanges de ceux-ci.

5. Papier décoratif selon l'une quelconque des revendications précédentes, dans lequel la couche supérieure comprend en outre un ou plusieurs agents de résistance à l'humidité et de réticulation.

6. Procédé de préparation d'un papier décoratif adapté à l'impression par jet d'encre selon l'une quelconque des revendications précédentes, dans lequel une couche supérieure est appliquée sur un papier de base au moyen d'un procédé de couchage.

7. Papier décoratif imprimé comprenant un papier décoratif selon les revendications 1 à 5 et une encre pigmentée.

8. Papier décoratif imprimé selon la revendication précédente, dans lequel ladite encre pigmentée est choisie dans le groupe constitué d'encres durcissables aux UV, d'encres à base d'eau, d'encres à base de solvant et de combinaisons de celles-ci.

9. Papier décoratif imprimé selon les revendications 7 et 8, dans lequel la porosité dudit papier décoratif imprimé est de 50-250 ml/min, telle que définie par la norme ISO 5636-3.

10. Papier décoratif imprimé selon les revendications 7 à 9, qui comprend en outre une surcouche et/ou une sous-couche.

11. Papier décoratif imprimé selon les revendications 7 à 10, qui comprend en outre une résine.

12. Papier décoratif imprimé selon les revendications 7 à 11, qui comprend en outre un substrat.

13. Procédé d'impression d'un papier décoratif selon les revendications 1 à 5, dans lequel ledit papier décoratif est imprimé au moyen d'une impression par jet d'encre, de préférence sur le côté du papier décoratif sur lequel est présente la couche supérieure.

14. Utilisation d'un papier décoratif imprimé selon les revendications 7 à 12 pour produire des stratifiés, pour les meubles ou des applications de décoration personnalisées.
